# FASCICULE DE BREVET EUROPEEN

(11) **EP 2 422 177 B1**
(45) Date de publication et mention de la délivrance du brevet: **26.12.2018**
(21) Numéro de dépôt: 10714009.7
(22) Date de dépôt: 21.04.2010
(51) Int. Cl.: G01M 3/02, G01M 15/14, F16L 55/115

(54) **TETE D'ETANCHEITE POUR UNE INSTALLATION DE TESTS FLUIDIQUES SUR UNE PIECE DE TURBOMACHINE D'AERONEF**
DICHTKOPF FÜR EINE INSTALLATION FÜR FLUIDTESTS AN EINEM TEIL EINES TURBINENTRIEBWERKS EINES FLUGZEUGS
SEALING HEAD FOR AN INSTALLATION FOR FLUID TESTS ON A PART OF A TURBINE ENGINE OF AN AIRCRAFT

(30) Priorité: 22.04.2009 FR 0952632
(43) Date de publication de la demande: 29.02.2012
(73) Titulaire: Safran Aircraft Engines, 75015 Paris (FR)
(72) Inventeur: BREGIER, Ludovic, F-86100 Chatellerault (FR); CLEACH, Cathy, F-86130 Saint-Georges-Les-Baillargeaux (FR); MOREAU, Philippe, F-86210 Bonneuil Matour (FR)
(74) Mandataire: Ilgart, Jean-Christophe
(86) Numéro de dépôt international: PCT/EP2010/055261
(87) Numéro de publication internationale: WO 2010/122052

(56) Documents cités:
- DE-U1-202005 018 914
- GB-A- 1 190 773
- GB-A- 2 095 771
- GB-A- 2 303 926
- US-A- 4 602 500
- US-A- 4 779 904
- US-A1- 2009 084 170
- US-B1- 6 976 509

## Description

### DOMAINE TECHNIQUE

La présente invention se rapporte de façon générale au domaine des installations visant à pratiquer des tests fluidiques sur des pièces de turbomachine d'aéronef présentant un circuit d'écoulement d'un flux gazeux.

Plus spécifiquement, l'invention concerne une tête d'étanchéité équipant ce type d'installation, cette tête, également dénommée tête d'interface banc d'essai / pièce à tester, étant destinée à contacter de manière étanche la pièce à tester, afin de lui injecter un flux gazeux dans son circuit d'écoulement.

Le type de test fluidique réalisé peut être varié, et concerne par exemple la mesure d'un débit de fuite à travers la pièce à tester, par exemple le débit de fuite à travers une aube creuse de redresseur de turbine.

### ETAT DE LA TECHNIQUE ANTERIEURE

Une telle installation de tests comprend généralement un banc fixe et un support sur lequel est montée la pièce à tester, ainsi qu'une ou plusieurs têtes d'étanchéité, destinées à venir au contact de la pièce, respectivement en regard des ouvertures de celles-ci, afin de les alimenter en flux gazeux servant au test réalisé. Une telle installation est décrite dans le document US2009/0084170.

Habituellement, chaque tête d'étanchéité est portée par le piston d'un vérin, de manière à pouvoir être mise en translation et rotation/inclinaison selon l'axe du piston, en direction de son ouverture associée. L'alignement entre l'élément d'étanchéité de la tête et l'ouverture de la pièce à tester garantit normalement une étanchéité satisfaisante pour la circulation du flux gazeux s'échappant de la tête, et pénétrant dans l'ouverture de la pièce.

Néanmoins, un tel alignement peut s'avérer difficile à obtenir et à conserver, notamment en raison d'un déplacement possible de la pièce à tester, de sorte qu'il est généralement prévu qu'un opérateur vérifie le bon accostage de la tête sur la pièce, avant de lancer l'opération de test. Cela ralentit considérablement le procédé de tests, étant donné que de tels accostages doivent être réalisés fréquemment.

En outre, la nature étanche de l'accostage peut être difficile à détecter visuellement pour un opérateur. Ainsi, un défaut mineur d'alignement entre l'élément d'étanchéité et l'ouverture de la pièce peut échapper au contrôle visuel de l'opérateur, avec des conséquences importantes sur les mesures réalisées.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une tête d'étanchéité pour une installation visant à pratiquer des tests fluidiques sur une pièce de turbomachine d'aéronef présentant un circuit d'écoulement d'un flux gazeux, ladite tête comprenant un élément d'étanchéité suivant une ligne fermée et traversé intérieurement par un passage pour l'écoulement d'un flux gazeux, ledit élément d'étanchéité présentant une surface d'étanchéité destinée à venir au contact d'une pièce à tester, au niveau d'une ouverture de celle-ci destinée à être alimentée par ledit flux gazeux.

Selon l'invention, la tête d'étanchéité comprend en outre des moyens de centrage de l'élément d'étanchéité par rapport à ladite ouverture de la pièce à tester, lesdits moyens de centrage étant solidaires de cet élément et faisant saillie vers l'avant de ladite surface d'étanchéité présentant une portion extérieure entourant ces moyens de centrage.

Ainsi, l'invention prévoit astucieusement l'adjonction de moyens de centrage de l'élément d'étanchéité, destinés à pénétrer dans l'ouverture de la pièce à tester afin de procurer un alignement efficace de ces deux éléments, garant d'un accostage étanche. En d'autres termes, les moyens de centrage sont agencés de telle sorte que leur logement au sein de l'ouverture de la pièce garantit un positionnement satisfaisant de la portion extérieure de la surface d'étanchéité autour de l'ouverture. Le contrôle visuel de l'opérateur peut donc être simplifié, voire même supprimé, et les risques d'obtenir un accostage non-étanche sont réduits à néant. Les tests fluidiques à pratiquer peuvent donc s'enchaîner plus rapidement, avec par railleurs l'obtention de résultats très pertinents, du fait de l'absence de fuite au niveau de la jonction entre l'ouverture de la pièce et la surface d'étanchéité de la tête.

En outre, la spécificité propre à la présente invention offre une reproductibilité compatible avec les exigences associées à l'automatisation partielle ou complète de l'installation de test équipée de telles têtes. Une telle automatisation est donc avantageusement envisageable.

La tête d'étanchéité comprend également une base trouée ainsi que des moyens de raccordement agencés entre ladite base trouée et l'élément d'étanchéité, ladite tête étant prévue pour permettre la circulation du flux d'air, de l'arrière vers l'avant, à travers successivement ladite base trouée, les moyens de raccordement et ledit passage défini par l'élément d'étanchéité.

Dans un tel cas de figure, lesdits moyens de raccordement sont conçus pour autoriser un débattement desdits moyens de centrage par rapport à ladite base trouée. Ces moyens autorisent donc un autocentrage de l'élément d'étanchéité par rapport à son ouverture associée prévue sur la pièce à tester.

De préférence, pour assurer le débattement précité, lesdits moyens de raccordement prennent par exemple la forme d'une pièce élastique creuse, par exemple de révolution, destinée à être traversée par le flux gazeux, et adoptant par exemple la forme d'un soufflet. Un tel soufflet est en effet parfaitement adapté pour accompagner le débattement de l'élément d'étanchéité durant son autocentrage, tout en conférant une rigidité mécanique suffisante pour assurer le raccordement de cet élément sur la base trouée de la tête.

De préférence, lesdits moyens de centrage comprennent un pion ou une pluralité de pions de centrage, par exemple deux, trois ou quatre, en fonction de la forme de l'ouverture dans laquelle ils doivent pénétrer. De façon générale, les pions sont conçus et agencés de manière à créer le moins de perturbation possible sur le flux entrant dans la pièce à tester.

De préférence, lesdits moyens de centrage sont montés de manière amovible sur ledit élément d'étanchéité, afin de faciliter leur remplacement en cas d'usure.

L'invention a également pour objet un outillage pour une installation visant à pratiquer des tests fluidiques sur une pièce de turbomachine d'aéronef présentant un circuit d'écoulement d'un flux gazeux, ledit outillage comprenant une tête d'étanchéité telle que présentée ci-dessus, ainsi qu'une chambre de tranquillisation du flux gazeux, destinée à alimenter en flux gazeux ladite tête d'étanchéité, et montée sur celle-ci.

De préférence, cet outillage comprend en outre un vérin dont le piston porte ladite chambre de tranquillisation.

L'invention a également pour objet une installation visant à pratiquer des tests fluidiques sur une pièce de turbomachine d'aéronef présentant un circuit d'écoulement d'un flux gazeux, cette installation comprenant au moins un outillage tel que décrit ci-dessus, et de préférence autant d'outillages que d'ouvertures à alimenter simultanément en flux gazeux.

Enfin, l'invention a pour objet un procédé de réalisation d'un test fluidique sur une pièce de turbomachine d'aéronef présentant un circuit d'écoulement d'un flux gazeux, à l'aide d'une tête d'étanchéité telle que celle décrite ci-dessus, ledit procédé comprenant les étapes suivantes :
- déplacement de la tête d'étanchéité en direction de la pièce à tester, de manière à ce que ses moyens de centrage pénètrent dans l'ouverture de cette pièce, le déplacement étant poursuivi jusqu'à l'établissement d'un contact étanche entre ladite surface d'étanchéité et la pièce à tester ;
- injection du flux gazeux dans ladite ouverture de la pièce à tester, par ladite tête d'étanchéité ; et
- prise de mesures sur le flux gazeux.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de dessus d'une installation visant à pratiquer des tests fluidiques sur une pièce de turbomachine d'aéronef, l'installation se trouvant sous la forme d'un mode de réalisation préféré de la présente invention ;
- la figure 2 représente une vue en coupe prise le long de la ligne II-II de la figure 1, montrant la tête d'étanchéité équipant l'installation ;
- la figure 2a représente une vue similaire à celle montrée sur la figure 2, avec la tête d'étanchéité se présentant sous la forme d'une première alternative de réalisation ;
- la figure 2b représente une vue similaire à celle montrée sur la figure 2, avec la tête d'étanchéité se présentant sous la forme d'une seconde alternative de réalisation ;

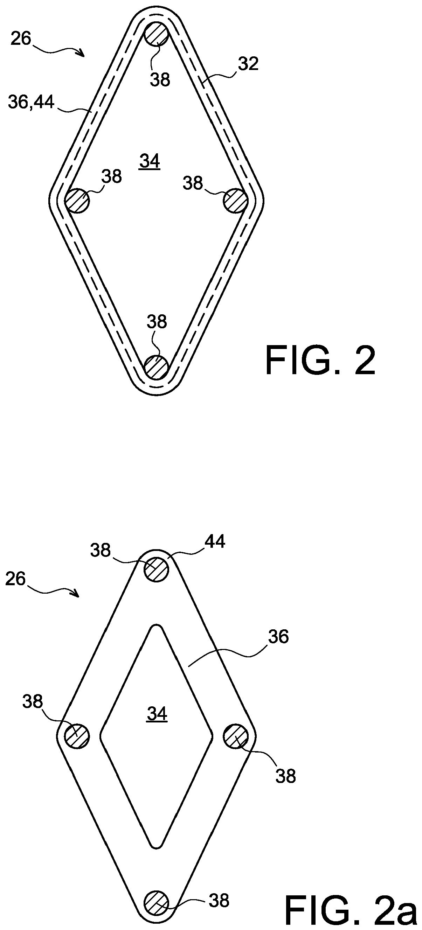

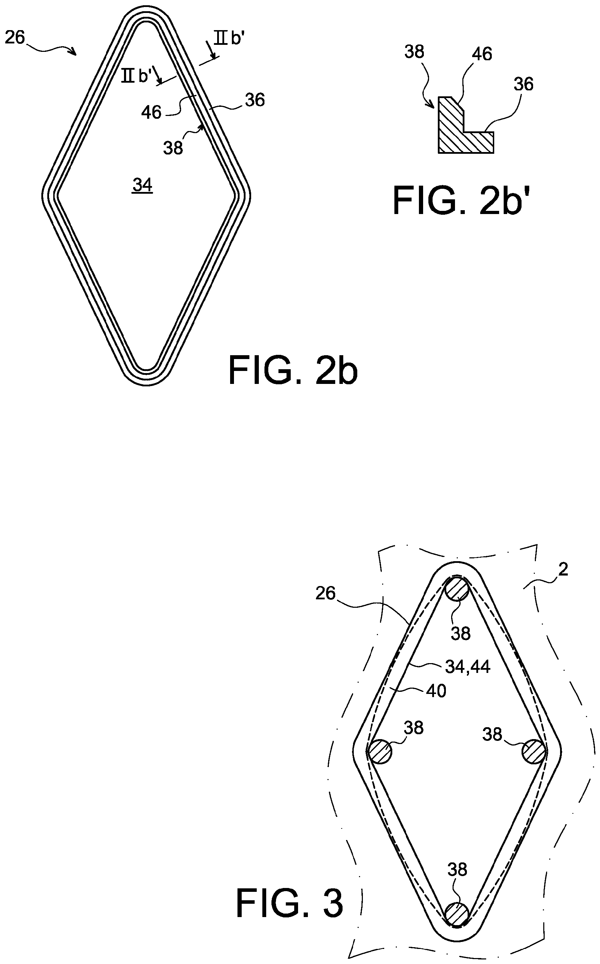

- la figure 2b' représente une vue en coupe prise le long de la ligne IIb'-IIb' de la figure 2b ;

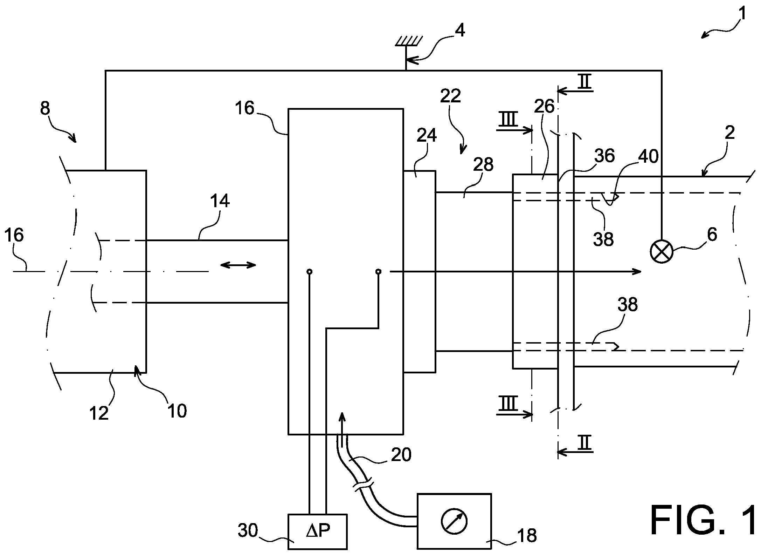

- la figure 3 représente une vue en coupe prise le long de la ligne III-III de la figure 1 ;

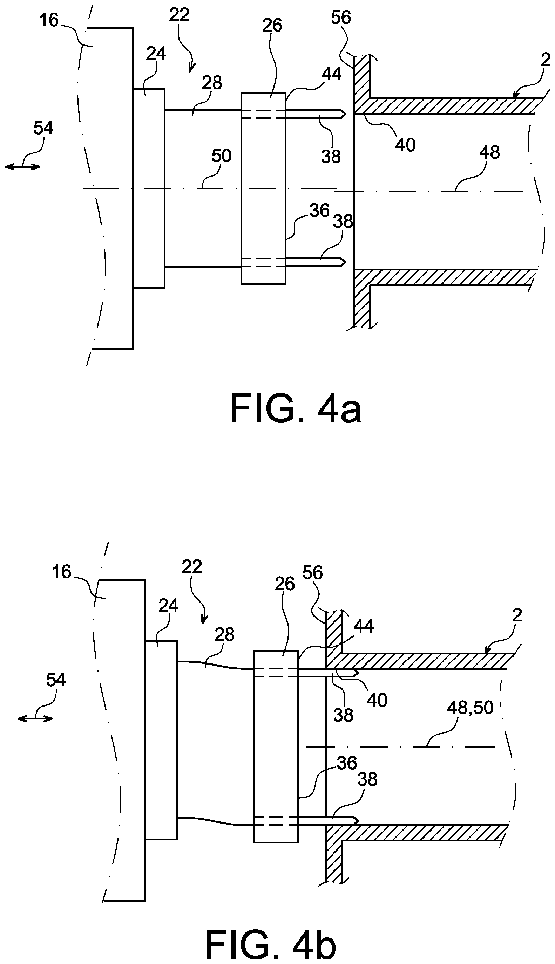

- les figures 4a et 4b schématisent le déplacement de la tête d'étanchéité en direction de la pièce à tester, provoquant un auto-centrage de son élément d'étanchéité ;

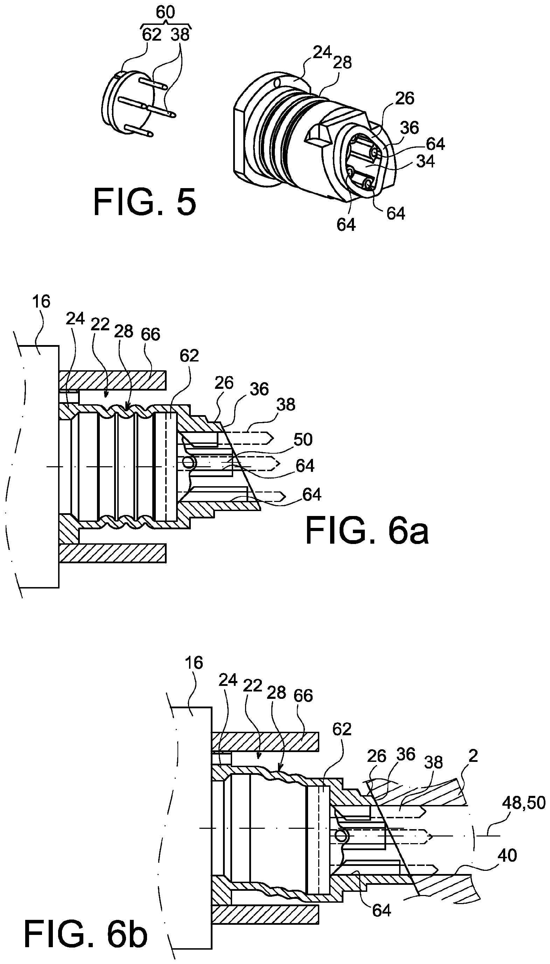

- la figure 5 montre une vue en perspective de la tête d'étanchéité représentée de manière plus détaillée ;
- la figure 6a représente une vue en coupe longitudinale de la tête montrée sur la figure 5, avec la tête occupant une position de repos ;
- la figure 6b représente une vue similaire à celle montrée sur la figure 6a, après que l'élément d'étanchéité se soit autocentré ;

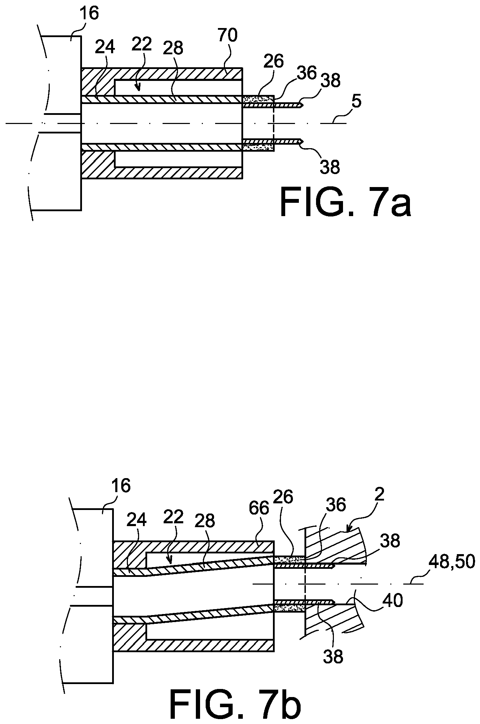

- la figure 7a représente une vue en coupe de la tête d'étanchéité se présentant sous la forme d'une alternative de réalisation, et occupant une position de repos ;
- la figure 7b représente une vue similaire à celle montrée sur la figure 7a, après que l'élément d'étanchéité se soit autocentré ;

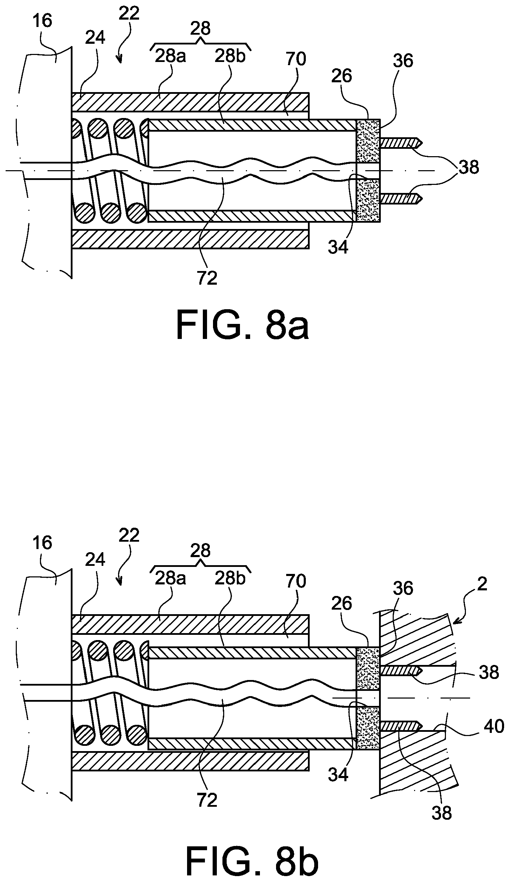

- la figure 8a représente une vue en coupe de la tête d'étanchéité se présentant sous la forme d'une autre alternative de réalisation, et occupant une position de repos ; et
- la figure 8b représente une vue similaire à celle montrée sur la figure 8a, après que l'élément d'étanchéité se soit autocentré.

### EXPOSÉ DÉTAILLÉ DE MODES DE RÉALISATION PRÉFÉRÉS

En référence tout d'abord à la figure 1, on peut voir une installation 1 visant à pratiquer des tests fluidiques sur une pièce de turbomachine d'aéronef 2 présentant un circuit d'écoulement d'un flux gazeux, l'installation se présentant sous la forme d'un mode de réalisation préféré de la présente invention.

Ici, la pièce à tester 2 est par exemple une aube creuse de redresseur, destinée en fonctionnement à être traversée par un flux d'air pénétrant par l'une de ses extrémités radiales, et s'échappant par des orifices (non représentés) disposés sur son bord de fuite, tout le long de celui-ci. Ainsi, l'installation 1 est prévue pour déterminer le débit de fuite à travers l'aube de redresseur 2, ce débit de fuite devant effectivement être testé par exemple après que l'aube ait subi une réparation.

L'installation 1 comprend un banc fixe 4, qui a été uniquement représenté schématiquement, et sur lequel la pièce 2 est montée fixement, de manière amovible, par l'intermédiaire de moyens de fixation classiques et connus de l'homme du métier, référencés 6 sur la figure 1. Sur ce banc est également monté un outillage 8 dont la fonction principale est d'alimenter en flux gazeux la pièce à tester 2, agencée sur le banc. Par conséquent, il est clair que si un seul outil 8 a été représenté sur la figure 1, l'installation peut en prévoir plusieurs, liés les uns aux autres ou indépendants les uns des autres, chacun destiné à coopérer avec une ouverture spécifique de la pièce 2 à travers laquelle un flux gazeux doit être injecté. A titre d'exemple, deux outillages 8 peuvent être prévus de part et d'autre de l'aube 2, de manière à injecter simultanément un flux gazeux à travers ces deux ouvertures radiales opposées.

L'outillage 8 comprend un vérin 10 dont le corps 12 est fixé au banc 4, et dont le piston 14 est déplaçable en translation vis-à-vis de son corps 12 selon la direction de son axe 16. L'extrémité du piston 14 porte une chambre de tranquillisation 16 dans laquelle un flux gazeux peut être introduit, par le biais de moyens d'alimentation annexes 18, raccordés à cette chambre par l'intermédiaire d'un flexible 20. A titre d'exemple indicatif, les moyens d'alimentation 18 peuvent prendre la forme d'une source gazeuse posée à côté du banc 4.

De plus, l'outillage 8 comprend une tête d'étanchéité 22, portée fixement par la chambre de tranquillisation 16 avec laquelle elle communique. Pour ce faire, la tête d'étanchéité 22 comprend une base trouée 24 servant au raccordement mécanique sur la chambre de tranquillisation 16, un élément/joint d'étanchéité 26, ainsi que des moyens de raccordement 28 agencés entre la base 24 et l'élément d'étanchéité 26 en appui contre la pièce à tester 2.

Avec une telle configuration, le flux gazeux circule de l'avant vers l'arrière, à travers successivement la chambre de tranquillisation 16, la base trouée 24, les moyens de raccordement 28, le joint d'étanchéité 26, pour enfin pénétrer dans la pièce à tester 2. Ici, l'obtention du débit de fuite recherchée consiste par exemple à déterminer la différence de pression entre deux points de la chambre 16 espacés l'un de l'autre dans la direction de circulation du flux gazeux, et ce à l'aide d'un appareil de mesure approprié 30.

En référence aux figures 1, 2 et 3, on peut apercevoir que le joint d'étanchéité 26 suit une ligne fermée 32 représentée schématiquement en pointillés sur la figure 2, ce joint définissant intérieurement un passage 34 pour le flux gazeux s'écoulant en direction de la pièce à tester.

Une des particularités de la présente invention réside dans le fait que la tête d'étanchéité 26 comprend en outre des moyens de centrage du joint d'étanchéité par rapport à la pièce à tester, ces moyens de centrage étant solidaires de l'élément d'étanchéité 26, et faisant saillie d'une surface d'étanchéité 36 définie par le joint et destinée à être au contact de la pièce à tester 2. Ici, les moyens de centrage prennent la forme d'une pluralité de pions de centrage 38 faisant saillie vers l'avant, et présentant chacun une extrémité en forme de pointe ou de forme bombée ou d'ogive, afin de faciliter son introduction dans l'ouverture 40 de la pièce à tester. En effet, comme cela est le mieux visible sur la figure 1, les pions de centrage 38 sont destinés à pénétrer dans l'ouverture 40 définie par la pièce 2 et à travers laquelle le flux gazeux est destiné à circuler, en épousant la paroi intérieure de cette ouverture 40.

De plus, la surface d'étanchéité 36 est formée de telle sorte qu'une portion extérieure de celle-ci entoure les moyens de centrage 38, de manière à ce que cette portion extérieure 44 se retrouve en appui sur la pièce 2 tout autour de l'ouverture 40, comme cela a été schématisé sur la figure 3. Cela permet de conférer une étanchéité parfaire au niveau de la jonction entre la tête d'étanchéité 22 et la pièce à tester 2. Dans ce mode de réalisation préféré, la portion extérieure 44 entourant les pions en saillie 38 correspond à l'intégralité de la surface d'étanchéité 36. Néanmoins, une alternative de réalisation montrée sur la figure 2a montre une configuration différente, dans laquelle les pions de centrage 38 sont issus de la surface d'étanchéité 36, impliquant qu'une partie de cette dernière se situe intérieurement par rapport à ces pions 38. D'ailleurs, ces derniers ne se retrouvent pas situés dans le passage 34, mais extérieurement par rapport à celui-ci, défini par la surface d'étanchéité 36.

Selon encore une autre alternative de réalisation, les moyens de centrage de l'élément d'étanchéité 26 ne prennent plus la forme d'une pluralité de pions espacés les uns des autres, mais d'une lèvre en saillie référencée également 38 sur les figures 2b et 2b', cette lèvre 38 s'étendant de façon continue tout autour de l'ouverture 34. Afin de faciliter l'introduction de cette lèvre 38 dans l'ouverture 40 correspondante de la pièce 2, celle-ci présente une extrémité chanfreinée 46.

En référence à présent aux figures 4a et 4b, il est montré le déplacement de la tête d'étanchéité 22 en direction de la pièce 2, alors qu'un léger défaut d'alignement est rencontré entre ces deux éléments 2, 22. En d'autres termes, l'axe central 48 de l'ouverture 40 n'est pas confondu avec l'axe central 50 du joint d'étanchéité 26, un décalage d'un millimètre étant par exemple observé. A cet titre, il est noté que l'outillage permet ici de rattraper des défauts d'alignement de l'ordre de quelques millimètres, par exemple 5 millimètres, même si les défauts d'alignement habituellement rencontrés sont de l'ordre de un millimètre.

Lorsque la tête d'étanchéité 22 est déplacée sous l'effet du mouvement du piston de l'outillage, selon la direction 54 parallèle aux axes 48 et 50, au moins l'un des pions de centrage 38 voit son extrémité effilée venir au contact de la paroi intérieure de l'ouverture 40. Au fur et à mesure que l'avancement de la tête 22 se poursuit, l'appui de la paroi intérieure de l'ouverture 40 sur le pion 38 précité se traduit par un débattement de l'ensemble des pions 38, conduisant à un même débattement du joint d'étanchéité 26 solidaire de ces pions. Le joint 26 voit donc son axe 50 se rapprocher progressivement de l'axe 48 de l'ouverture 40, jusqu'à devenir confondu avec ce dernier, comme montré sur la figure 4b.

Comme cela sera explicité ci-après, l'autocentrage ainsi provoqué de l'élément d'étanchéité 26 est autorisé grâce aux moyens de raccordement 28, qui permettent d'absorber le déplacement relatif entre le joint 26 et la base trouée 24 restant dans sa position initiale.

Le déplacement de la tête d'étanchéité 22 avec son joint d'étanchéité 26 autocentré par rapport à l'ouverture 40 est poursuivi jusqu'à obtenir le contact étanche entre la portion extérieure 44 de la surface d'étanchéité 26, et la surface 56 de la pièce 2 délimitant l'ouverture 40. Ce n'est qu'une fois cette jonction étanché établie que le flux gazeux peut être injecté dans la chambre de tranquillisation de l'installation, cette opération étant suivie par les opérations de mesure requises sur ce même flux.

La figure 5 montre une possibilité de réalisation pour la tête d'étanchéité 22, dont l'une des particularités réside dans le fait que les pions de centrage 38 sont montés de manière amovible sur le joint d'étanchéité 26. En effet, il est prévu une pièce consommable 60 munie d'une base 62 à partir de laquelle font saillie les pions 38, cette pièce consommable 60 étant destinée à être introduite dans la tête creuse 22, de façon à faire pénétrer chacun des pions 38 dans leurs fourreaux associés 64, prévus au sein du passage 34 défini par le joint d'étanchéité 26.

La figure 6a montre cette tête d'étanchéité 22 au repos, montée sur la chambre de tranquillisation 16 par l'intermédiaire de sa base 24, et logée dans un guide 66 rapporté fixement sur cette même chambre de tranquillisation. Ici, les moyens de raccordement 28 prennent la forme d'une pièce élastique creuse, de forme révolutionnaire, et adoptant la forme d'un soufflet qui se révèle particulièrement satisfaisant pour accompagner le déplacement relatif recherché entre la base 24 et le joint d'étanchéité 26, lors de l'autocentrage de ce dernier. A cet égard, la figure 6b montre la tête d'étanchéité 22 avec son joint 26 en configuration autocentré par rapport à l'ouverture 40 de la pièce 2 dans laquelle les moyens de centrage 38 ont été introduits, le débattement entre le joint d'étanchéité 26 et la base 24 étant donc ici autorisé par la déformation élastique du soufflet 28. Naturellement, lors du retrait de la tête d'étanchéité 26, un débattement inverse est observé, conduisant le joint 26 à retrouver sa position de repos telle que montrée sur la figure 6a.

Les figures 7a et 7b montrent une alternative de réalisation pour la tête 22, dans laquelle la principale modification réside dans la conception des moyens de raccordement 28. Ils prennent ici la forme d'un cylindre creux élastique présentant donc une flexibilité suffisante pour permettre l'autocentrage de l'élément d'étanchéité 26 dans l'ouverture 40 de la pièce 2, tel que cela a été représenté sur la figure 7b. En effet, la flexibilité du cylindre 28, de préférence de section circulaire, permet le débattement de ce joint 26 par rapport à la base 24 restant fixe.

Enfin, les figures 8a et 8b montrent une autre alternative de réalisation pour la tête d'étanchéité 22, dans laquelle les principaux changements résident également dans la conception des moyens de raccordement 28. Ils comprennent ici deux cylindres sensiblement rigides concentriques 28a, 28b, le cylindre extérieur 28a intégrant la base trouée 24 solidaire de la chambre de tranquillisation 16. De plus, le cylindre intérieur 28b porte à son extrémité avant le joint d'étanchéité 26, un ressort pouvant éventuellement être interposé entre son extrémité arrière et la chambre de tranquillisation 16. Ici, un jeu radiale 70 est expressément prévu entre les deux cylindres 28a, 28b, de manière à pouvoir obtenir le débattement radial entre le joint d'étanchéité 26 et la base 24 de la tête 22. En effet, comme cela est montré sur la figure 8b, l'autocentrage de l'élément d'étanchéité 26 dans l'ouverture 40 de la pièce 2 peut s'opérer par consommation du jeu 70 prévu à cet effet. De manière à conserver l'étanchéité au sein de la tête 22, il peut être prévu que le passage 34 défini à travers le joint d'étanchéité 26 soit relié à la chambre de tranquillisation 16 par un conduit 72, de préférence flexible, cheminant à travers l'espace creux défini par le cylindre intérieur 28b et la base 24.

Dans toute la description qui précède, il a été décrit une situation dans laquelle le défaut d'alignement se traduit par un décalage entre l'axe central 50 du joint d'étanchéité 26, et l'axe central 48 de l'ouverture 40 destiné à coopérer avec l'outillage portant la tête considérée 22, ces deux axes 48, 50 étant décalés mais restant néanmoins parallèles. Ainsi, le débattement recherché pour aboutir à l'autocentrage du joint d'étanchéité correspond à un débattement radial visant à rendre les deux axes précités confondus.

Néanmoins, l'invention n'est pas limitée à ce type de correction d'alignement, et est également adaptée pour faire face à d'autres défauts d'alignement, comme celui résultant par exemple d'une légère inclinaison de l'un des deux axes par rapport à l'autre, le débattement observé durant l'autocentrage du joint d'étanchéité 26 correspondant dans ce cas à une correction progressive de cette inclinaison, toujours de façon à rendre ces deux axes 48, 50 confondus. Néanmoins, dans ce cas de figure, il est toujours fait référence à un « débattement radial » du joint 26 par rapport à la base trouée 24 de la tête d'étanchéité 22.

Comme mentionné ci-dessus, la tête d'étanchéité 22 est conçue de manière à pouvoir autoriser un déplacement du joint d'étanchéité 26, par rapport à la base 24, en vue de face, de l'ordre de quelques millimètres à partir de la position de repos.

Bien entendu, diverses modifications peuvent être apportées par l'homme du métier à l'invention qui vient d'être décrite, uniquement à titre d'exemples non limitatifs.

## Revendications

1. Tête d'étanchéité (22) pour une installation visant à pratiquer des tests fluidiques sur une pièce (2) de turbomachine d'aéronef présentant un circuit d'écoulement d'un flux gazeux, ladite tête comprenant un élément d'étanchéité (26) suivant une ligne fermée (32) et traversé intérieurement par un passage (34) pour l'écoulement d'un flux gazeux, ledit élément d'étanchéité présentant une surface d'étanchéité (36) destinée à venir au contact d'une pièce à tester, au niveau d'une ouverture (40) de celle-ci destinée à être alimentée par ledit flux gazeux,
**caractérisée en ce qu'**elle comprend en outre des moyens (38) de centrage de l'élément d'étanchéité (26) par rapport à ladite ouverture (40) de la pièce à tester, lesdits moyens de centrage (38) étant solidaires de cet élément et faisant saillie vers l'avant de ladite surface d'étanchéité (36) présentant une portion extérieure (44) entourant ces moyens de centrage, **en ce qu'**elle comprend également une base trouée (24) ainsi que des moyens de raccordement (28) agencés entre ladite base trouée et l'élément d'étanchéité (26), ladite tête étant prévue pour permettre la circulation du flux d'air, de l'arrière vers l'avant, à travers successivement ladite base trouée (24), les moyens de raccordement (28) et ledit passage (34) défini par l'élément d'étanchéité (26),
et **en ce que** lesdits moyens de raccordement (28) sont conçus pour autoriser un débattement desdits moyens de centrage par rapport à ladite base trouée.

2. Tête d'étanchéité selon la revendication 1, **caractérisée en ce que** lesdits moyens de raccordement (28) prennent la forme d'une pièce élastique creuse, destinée à être traversée par le flux gazeux.

3. Tête d'étanchéité selon la revendication 2, **caractérisée en ce que** ladite pièce élastique creuse prend la forme d'un soufflet (28).

4. Tête d'étanchéité selon l'une quelconque des revendications précédentes, **caractérisée en ce que** lesdits moyens de centrage (38) comprennent un pion de centrage ou une pluralité de pions de centrage.

5. Tête d'étanchéité selon l'une quelconque des revendications précédentes, **caractérisée en ce que** lesdits moyens de centrage (38) sont montés de manière amovible sur ledit élément d'étanchéité (26) .

6. Outillage (8) pour une installation visant à pratiquer des tests fluidiques sur une pièce (2) de turbomachine d'aéronef présentant un circuit d'écoulement d'un flux gazeux, ledit outillage comprenant une tête d'étanchéité (22) selon l'une quelconque des revendications précédentes, ainsi qu'une chambre (16) de tranquillisation du flux gazeux, destinée à alimenter en flux gazeux ladite tête d'étanchéité (22), et montée sur celle-ci.

7. Outillage selon la revendication 6, **caractérisé en ce qu'**il comprend en outre un vérin (10) dont le piston (14) porte ladite chambre de tranquillisation (16).

8. Installation (1) visant à pratiquer des tests fluidiques sur une pièce (2) de turbomachine d'aéronef présentant un circuit d'écoulement d'un flux gazeux, **caractérisée en ce qu'**elle comprend au moins un outillage (8) selon la revendication 6 ou la revendication 7.

9. Procédé de réalisation d'un test fluidique sur une pièce de turbomachine d'aéronef présentant un circuit d'écoulement d'un flux gazeux, à l'aide d'une tête d'étanchéité selon l'une quelconque des revendications 1 à 5, ledit procédé comprenant les étapes suivantes :
- déplacement de la tête d'étanchéité en direction de la pièce à tester, de manière à ce que ses moyens de centrage pénètrent dans l'ouverture de cette pièce, le déplacement étant poursuivi jusqu'à l'établissement d'un contact étanche entre ladite surface d'étanchéité et la pièce à tester ;
- injection du flux gazeux dans ladite ouverture de la pièce à tester, par ladite tête d'étanchéité ; et
- prise de mesures sur le flux gazeux.

## Patentansprüche

1. Dichtkopf (22) für eine Vorrichtung, die zur Durchführung von Fluidtests an einem Teil (2) eines Flugzeug-Turbotriebwerks mit einem Gasstrom-Strömungskreis gedacht ist, wobei der genannte Kopf ein Dichtelement (26) auf einer geschlossenen Linie (32) enthält, durch das innen ein Durchlass (34) für das Strömen eines Gasstroms führt, wobei das genannte Dichtelement eine Dichtfläche (36) aufweist, die dazu gedacht ist, in Kontakt mit einem zu testenden Teil zu kommen, und zwar im Bereich einer Öffnung (40) dieses Letzteren, die dazu bestimmt ist, mit dem genannten Gasstrom gespeist zu werden,
**dadurch gekennzeichnet,**
**dass** er ferner Mittel (38) zum Zentrieren des Dichtelements (26) auf die genannte Öffnung (40) des zu testenden Teils aufweist, wobei diese Zentriermittel (38) fest mit diesem Element verbunden sind und nach vorn von der genannten Dichtfläche (36) hervorstehen, die einen äußeren Bereich (44) aufweist, der sich um diese Zentriermittel herum erstreckt,
**dass** er auch eine mit Löchern versehene Basis (24) aufweist, sowie Anschlussmittel (28), die zwischen dieser mit Löchern versehenen Basis und dem Dichtelement (26) angeordnet sind, wobei der genannte Kopf dazu vorgesehen ist, die Zirkulation des Luftstroms nacheinander durch die genannte mit Löchern versehene Basis (24), die Anschlussmittel (28) und den genannten von dem Dichtelement (26) gebildeten Durchlass (34) zu ermöglichen,
und **dass** diese Anschlussmittel (28) dergestalt ausgeführt sind, dass sie einen Ausschlag der genannten Zentriermittel gegenüber der mit Löchern versehenen Basis zulassen.

2. Dichtkopf nach Anspruch 1,
**dadurch gekennzeichnet,**
**dass** die genannten Anschlussmittel (28) die Form eines hohlen, elastischen Teils annehmen, das dazu vorgesehen ist, von einem Gasstrom durchströmt zu werden.

3. Dichtkopf nach Anspruch 2,
**dadurch gekennzeichnet,**
**dass** das genannte hohle, elastische Teil die Form eines Balgs (28) annimmt.

4. Dichtkopf nach einem der vorherigen Ansprüche,
**dadurch gekennzeichnet,**
**dass** die genannten Zentriermittel (38) einen Zentrierstift oder eine Mehrzahl von Zentrierstiften umfassen.

5. Dichtkopf nach einem der vorherigen Ansprüche,
**dadurch gekennzeichnet,**
**dass** die genannten Zentriermittel (38) abnehmbar an dem Dichtelement (26) angebracht sind.

6. Werkzeugausrüstung (8) für eine Vorrichtung, die zur Durchführung von Fluidtests an einem Teil (2) eines Flugzeug-Turbotriebwerks mit einem Gasstrom-Strömungskreis gedacht ist, wobei die genannte Werkzeugausrüstung einen Dichtkopf (22) nach einem der vorherigen Ansprüche umfasst, sowie eine Kammer (16) zur Beruhigung des Gasstroms, die dazu vorgesehen ist, dem genannten Dichtkopf (22) einen Gasstrom zuzuführen, und an diesem angebracht ist.

7. Werkzeugausrüstung nach Anspruch 6,
**dadurch gekennzeichnet,**
**dass** sie ferner einen Zylinder (10) enthält, dessen Kolben (14) die genannte Beruhigungskammer (16) trägt.

8. Vorrichtung (1) zur Durchführung von Fluidtests an einem Teil (2) eines Flugzeug-Turbotriebwerks mit einem Gasstrom-Strömungskreis,
**dadurch gekennzeichnet,**
**dass** sie mindestens eine Werkzeugausrüstung (8) nach Anspruch 6 oder Anspruch 7 aufweist.

9. Verfahren zur Durchführung eines Fluidtests an einem Teil eines Flugzeug-Turbotriebwerks mit einem Gasstrom-Strömungskreis mittels eines Dichtkopfs nach einem der Ansprüche 1 bis 5, wobei dieses Verfahren die folgenden Verfahrensschritte umfasst:
- Verschieben des Dichtkopfs in Richtung des zu testenden Teils dergestalt, dass seine Zentriermittel in die Öffnung dieses Teils eindringen, wobei das Verschieben fortgesetzt wird, bis ein dichter Kontakt zwischen der genannten Dichtfläche und dem zu testenden Teil hergestellt ist;
- Einleiten des Gasstroms in die genannte Öffnung des zu testenden Teils durch den genannten Dichtkopf hindurch; und
- Ergreifen von Maßnahmen bezüglich des Gasstroms.

## Claims

1. A sealing head (22) for an installation aiming at performing fluid tests on an aircraft turbine engine part (2) having a circuit for the flowing of a gas flow, said head comprising a sealing element (26) following a closed line (32) and interiorly crossed by a passage (34) for letting through a gas flow, said sealing element having a sealing surface (36) intended to come into contact with a part to be tested, at an aperture (40) of the latter intended to be fed with said gas flow,
**characterized in that** it further comprises means (38) for centering the sealing element (26) with respect to said aperture (40) of the part to be tested, said centering means (38) being firmly attached to this element and protruding towards the front of said sealing surface (36) having an outer portion (44) surrounding these centering means, and **in that** it also comprises a base with holes (24) as well as connecting means (28) laid out between said base with holes and the sealing element (26), said head being provided for allowing circulation of the air flow, from the rear to the front, successively through said base with holes (24), the connecting means (28) and said passage (34) defined by the sealing element (26), and **in that** said connecting means (28) are designed in order to allow a displacement of said centering means with respect to said perforated base.

2. The sealing head according to claim 1, **characterized in that** said connecting means (28) assume the shape of a hollow elastic part, intended to be crossed by the gas flow.

3. The sealing head according to claim 2, **characterized in that** said hollow elastic part assumes the shape of bellows (28).

4. The sealing head according to any of the preceding claims, **characterized in that** said centering means (38) comprise a centering pin or a plurality of centering pins.

5. The sealing head according to any of the preceding claims, **characterized in that** said centering means (38) are removably mounted on said sealing element (26).

6. Tooling (8) for an installation aiming at performing fluid tests on an aircraft turbine engine part (2) having a circuit for the flowing of a gas flow, said tooling comprising a sealing head (22) according to any of the preceding claims, as well as a chamber (16) for tranquilization of the gas flow, intended to feed said sealing head (22) with a gas flow, and mounted on the latter.

7. The tooling according to claim 6, **characterized in that** it further comprises an actuator (10), the piston (14) of which bears aid tranquilization chamber (16).

8. An installation (1) aiming at performing fluid tests on an aircraft turbine engine part (2) having a circuit for the flowing of a gas flow, **characterized in that** it comprises at least one tooling (8) according to claim 6 or claim 7.

9. A method for performing a fluid test on an aircraft turbine engine part having a circuit for the flowing of a gas flow, by means of a sealing head according to any of claims 1 to 5, said method comprising the following steps:
- displacing the sealing head towards the part to be tested, so that its centering means penetrate into the aperture of said part, the displacement being continued until a sealed contact is established between said sealing surface and the part to be tested;
- injecting the gas flow into said aperture of a part to be tested, through said sealing head; and
- measurements are taken on the gas flow.
